# DEMANDE DE BREVET EUROPEEN

(11) **EP 1 908 733 A1**
(43) Date de publication de la demande: **09.04.2008**
(21) Numéro de dépôt: 07301391.4
(22) Date de dépôt: 25.09.2007
(51) Int. Cl.: C02F 1/16, B01D 1/00, F01K 13/02, F02C 6/00, C02F 103/08

(54) **Procédé et usine de production conjointe d'électricité, de vapeur et d'eau désalinisée**

(30) Priorité: 02.10.2006 FR 0654043
(71) Demandeur: L'AIR LIQUIDE, Société Anonyme pour l'Etude et l'Exploitation des Procédés Georges Claude, 75007 Paris (FR)
(72) Inventeur: Koh, Wen Li Daphne, 75003, Paris (FR); Gomez-Valero, Juan, 28224, Pozuelo de Alarcon (Madrid) (ES)
(74) Mandataire: Conan, Philippe Claude

(57) **Abrégé**

L'invention concerne un procédé de production d'électricité, de vapeur et d'eau désalinisée au moyen d'une unité de production de vapeur, d'une turbine à vapeur et d'une unité de désalinisation d'eau de mer dans lequel :
- l'unité de production de vapeur produit de la vapeur,
- la turbine à vapeur utilise au moins une partie de la vapeur produite par l'unité de production de vapeur et produit de l'électricité et de la vapeur,
- l'unité de désalinisation d'eau de mer produit de l'eau désalinisée par vaporisation de l'eau de mer par échange de chaleur avec au moins une partie de la vapeur produite par la turbine à vapeur,

dans lequel on contrôle la quantité de vapeur produite par l'unité de production de vapeur à fournir à la turbine à vapeur en fonction de la demande en électricité, de la demande en eau désalinisée et de la demande en vapeur.

## Description

La présente invention concerne la production conjointe d'électricité, de vapeur et d'eau désalinisée.

L'invention concerne les sites de production d'eau désalinisée dans lesquels des technologies combinant chaleur et/ou électricité ("combined heat and/or power" ou CHP en anglais) sont également utilisées.

De tels sites sont connus de l'art antérieur. US 5,096,543 et US 5,346,592 décrivent des usines de désalinisation d'eau de mer dans lesquelles la chaleur nécessaire au traitement de l'eau de mer provient de la vapeur issue d'une turbine à vapeur.

GB 1,182,021 décrit une turbine à vapeur produisant de l'électricité, dont la vapeur est utilisée dans un évaporateur utile à la production d'eau distillée à partir d'eau de mer. A la sortie de cet évaporateur, le condensat de vapeur est introduit dans la chaudière permettant de produire la vapeur destinée à l'alimentation de la turbine à vapeur.

Le problème des sites de l'art antérieur est qu'ils sont conçus pour produire des quantités d'électricité, d'eau désalinisée et/ou de vapeur déterminées. Or la demande en ces matières premières peut être variable dans le temps, tout particulièrement la demande en électricité. Les sites de l'art antérieur ne permettent pas de moduler les trois différentes productions en fonction de leurs demandes respectives. Et l'électricité produite en excédent par rapport à la demande ne peut être stockée.

Le but de la présente invention est donc de proposer un procédé de production conjointe d'électricité, d'eau désalinisée et de vapeur susceptible d'être adapté aux variations de demande en ces trois produits et notamment en électricité.

Dans ce but l'invention concerne un procédé de production d'électricité, de vapeur et d'eau désalinisée au moyen d'une unité de production de vapeur, d'une turbine à vapeur et d'une unité de désalinisation d'eau de mer dans lequel :
- l'unité de production de vapeur produit de la vapeur,
- la turbine à vapeur utilise au moins une partie de la vapeur produite par l'unité de production de vapeur et produit de l'électricité et de la vapeur,
- l'unité de désalinisation d'eau de mer produit de l'eau désalinisée par vaporisation de l'eau de mer par échange de chaleur avec au moins une partie de la vapeur produite par la turbine à vapeur,
dans lequel on contrôle la quantité de vapeur produite par l'unité de récupération à fournir à la turbine à vapeur en fonction de la demande en électricité, de la demande en eau désalinisée et de la demande en vapeur.

Le procédé selon l'invention comprend la mise en oeuvre d'une unité de production de vapeur ou chaudière. Une telle unité consiste généralement en un dispositif de combustion produisant de la chaleur pour transformer de l'eau en vapeur : elle comprend une série d'échangeurs de chaleur, par exemple des serpentins, dans lesquels de l'eau circule et est mise au contact de la chaleur produite par la combustion. La vapeur produite par cette unité de production de vapeur est à haute pression, c'est-à-dire à une pression susceptible d'alimenter une turbine à vapeur. La valeur de cette pression dépend aussi de la puissance électrique requise. En général, cette pression dépend de la température requise pour la désalinisation thermique, ce qui correspond au minimum à la vapeur saturée à 2 bar effectifs.

Cette vapeur produite par l'unité de production de vapeur est utilisée pour alimenter une turbine à vapeur : ainsi, la pression de la vapeur produite par la chaudière retombe au sein d'une turbine à vapeur de manière à produire de l'électricité. De la vapeur de moindre pression est extraite de cette turbine à vapeur : s'il s'agit d'une turbine à vapeur à contre-pression (vapeur produite à P > Patm), la vapeur est extraite de son dernier étage, s'il s'agit d'une une turbine à condensation de vapeur produisant de l'eau chaude (ou vapeur à P < Patm), la vapeur est extraite d'un étage intermédiaire. Il ressort de la turbine à vapeur une vapeur de pression inférieure à celle qui est entrée. De préférence, il s'agit d'une turbine à vapeur à contre-pression.

La vapeur sortant de la turbine à vapeur est ensuite utilisée pour vaporiser l'eau de mer au cours du procédé de désalinisation thermique d'eau de mer. Cette vaporisation se fait au moyen d'échangeurs de chaleur entre cette vapeur et l'eau froide de la mer. En général, l'évaporation de l'eau de mer a lieu dans une succession de récipients, présentant chacun une pression inférieure au précédent. Comme la température d'évaporation diminue au fur et à mesure que la pression décroît, la vapeur évaporée dans un récipient peut être utilisée pour chauffer le suivant. Seul le premier récipient présentant la pression la plus élevée nécessite un apport de chaleur externe ; cet apport de chaleur est fourni par la vapeur provenant de la turbine à vapeur.

Selon l'invention, on contrôle la quantité de vapeur produite par l'unité de production de vapeur à fournir à la turbine à vapeur en fonction de la demande en électricité, de la demande en eau désalinisée et de la demande en vapeur. Ainsi, si la demande en électricité s'affaiblit, une moindre quantité de vapeur est introduite dans la turbine à vapeur. La partie de vapeur produite par l'unité de production de vapeur qui n'est pas fournie à la turbine à vapeur est mélangée avec la vapeur d'eau détendue dans la turbine à vapeur. Alors, l'unité de désalinisation d'eau de mer produit de l'eau désalinisée par vaporisation de l'eau de mer par échange de chaleur avec cette partie du mélange de vapeurs produite par l'unité de production de vapeur et de vapeur produite par la turbine à vapeur. Ainsi, l'excédent de vapeur n'est pas perdu, il est valorisé au sein de l'unité de désalinisation d'eau de mer.

Et si la demande en électricité augmente, une plus grande quantité de vapeur provenant de l'unité de production de vapeur est introduite dans la turbine à vapeur.

En général, de manière à optimiser la récupération d'énergie au sein du procédé, on met en oeuvre les options suivantes :
- après avoir vaporisé l'eau de mer, la vapeur produite par la turbine à vapeur devient un condensat de vapeur qui est utilisé comme source d'appoint en eau par l'unité de production de vapeur.
- une partie de l'eau désalinisée est utilisée comme source d'appoint en eau par l'unité de production de vapeur.
- le procédé met en oeuvre une turbine à gaz produisant une partie de l'électricité, l'unité de production de vapeur utilisant la chaleur des gaz d'échappement de la turbine à gaz. On entend par "turbine à gaz" (TAG), un dispositif comprenant au moins un compresseur d'air, une chambre de combustion et une turbine de détente. Dans la turbine à gaz, l'air comprimé produit est introduit avec au moins un combustible dans la chambre de combustion de la turbine et les gaz de combustion produits passent à travers la turbine de détente pour produire de l'électricité au moyen d'un alternateur. Généralement, ces gaz passent ensuite à travers une chaudière de récupération de chaleur pour produire de la vapeur. Le combustible de la turbine à gaz est habituellement du gaz naturel ou un combustible liquide hydrocarboné. L'unité de production de vapeur peut récupérer la chaleur des gaz d'échappement de la turbine à gaz.
- l'unité de désalinisation d'eau de mer peut produire de l'eau désalinisée en partie par une technologie d'osmose inverse utilisant l'électricité produite par la turbine à vapeur.

L'invention concerne également une usine de production d'électricité, de vapeur et d'eau désalinisée comprenant :
- une unité de production de vapeur,
- une turbine à vapeur,
- une unité de désalinisation d'eau de mer ,
- un moyen de fourniture de la vapeur produite par l'unité de production de vapeur à la turbine à vapeur,
- un moyen de fourniture d'au moins une partie de la vapeur produite par la turbine à vapeur à l'unité de désalinisation d'eau de mer,
dans laquelle le moyen de fourniture de la vapeur produite par l'unité de production de vapeur à la turbine à vapeur est équipé d'un moyen de contrôle de la quantité de vapeur fournie à la turbine à vapeur.

Ce moyen de contrôle de la quantité de vapeur fournie à la turbine à vapeur peut être une dérivation placée sur le moyen de fourniture de la vapeur produite par l'unité de production de vapeur à la turbine à vapeur susceptible de dévier une partie de la vapeur produite par l'unité de production de vapeur. Cette dérivation est généralement équipée d'une vanne permettant de contrôler la quantité de vapeur fournie à la turbine à vapeur. De préférence, cette dérivation dévie une partie de la vapeur produite par l'unité de production de vapeur vers le moyen de fourniture d'au moins une partie de la vapeur produite par la turbine à vapeur à l'unité de désalinisation d'eau de mer. Selon un mode préféré, cette dérivation est une vanne papillon avec une détente isenthalpique de la vapeur. Une détente isenthalpique permet au gaz d'augmenter ou de diminuer sa température en laissant ledit gaz se détendre librement à enthalpie constante (ce qui signifie qu'aucune chaleur n'est transférée au gaz ou du gaz, et qu'aucun travail extérieur n'est extrait (à travers une turbine, par exemple)). En pratique, pour que la détente isenthalpique s'effectue, il est préférable que la vapeur se détende à travers une vanne de détente qui doit être bien isolée afin d'éviter tout transfert de chaleur à la vapeur ou depuis la vapeur.

L'usine peut également comprendre une turbine à gaz et un moyen de fourniture des gaz d'échappement de la turbine à gaz à l'unité de production de vapeur.

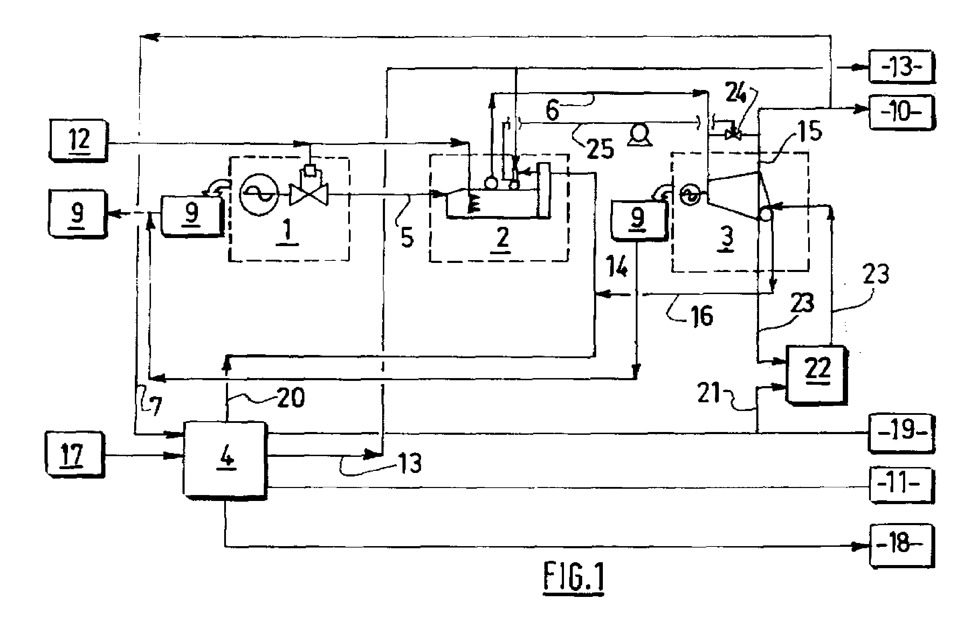

La figure 1 illustre l'usine et le procédé selon l'invention. Cette usine comprend une turbine à gaz 1 alimentée par un combustible 12 et produisant de l'électricité 9. Cette turbine à gaz rejette des gaz d'échappement chauds 5. Ces gaz chauds 5 sont introduits dans une unité de production de vapeur 2. Cette unité 2 est alimentée en eaux 13, 14 ; elle brûle le combustible 12 pour transformer l'eau en vapeur haute pression 6. La vapeur haute pression 6 est introduite dans une turbine à vapeur 3 de manière à produire de l'électricité 9. La turbine à vapeur 3 rejette de la vapeur à basse pression 15 et un condensat de vapeur 16 produit par le condenseur de la turbine à vapeur 3 ; ce condensat 16 est utilisé comme eau d'alimentation 14 de l'unité de production de vapeur 2. La vapeur haute pression 6 produite par l'unité de production de vapeur 12 et la vapeur 15 rejetée par la turbine à vapeur 3 sont mélangées. Une partie 7 de ce mélange est utilisée dans l'unité de désalinisation d'eau de mer 4 de manière à évaporer l'eau de mer 17 par échange de chaleur. Suite à l'échange de chaleur, cette vapeur 7 se transforme en un condensat 20 qui est utilisé comme eau d'alimentation 14 de l'unité de production de vapeur 2. L'unité de désalinisation produit de la saumure 18, de l'eau potable 11 et/ou de l'eau déminéralisée 13 et/ou de l'eau industrielle 19 de qualité inférieure à l'eau potable. L'eau déminéralisée 13 est utilisée pour alimenter en eau l'unité de production de vapeur 2 pour compenser les pertes dans le circuit de production de vapeur. Une partie de l'eau industrielle 19 alimente la tour de refroidissement 22 destinées à fournir de l'eau froide 23 au condenseur de la turbine à vapeur 3. La vanne 24 permet de dériver une partie de la vapeur haute pression 6 produite par l'unité de production de vapeur 2 avant son introduction dans la turbine à vapeur 3. Si cette vanne 24 est fermée, toute la vapeur haute pression 6 produite est introduite dans la turbine à vapeur 2 ce qui génère une importante quantité d'électricité 9. Si la vanne 24 est ouverte, une quantité plus faible de vapeur 6 est envoyée à la turbine 3 ; celle-ci produit donc moins d'électricité. Par contre, le site industriel produit plus de vapeur 10. Dans la vanne 24, la vapeur haute pression subit une détente isenthalpique : elle est refroidie au moyen d'eau 25 provenant de l'alimentation en eau de l'unité de production de vapeur 2 afin que la vapeur présente la même température que la vapeur à basse pression 15 produite par la turbine à vapeur 3.

L'invention permet d'améliorer l'efficacité thermique et électrique d'une usine en intégrant un moyen de production combinée de chaleur et d'électricité avec une usine de désalinisation d'eau de mer utilisant de la vapeur de manière continue. Cette invention est une solution énergétiquement rentable pour répondre aux changements rapides de demandes en vapeur et/ou en électricité. L'utilisation de vapeur avec une chaleur de faible énergie dans les évaporateurs de désalinisation est un moyen pour ajuster la production de chaleur et d'électricité avec un rendement élevé. L'unité de désalinisation est une forme flexible et écologique de stockage de l'électricité puisqu'elle permet une modulation de la production d'électricité. L'unité de désalinisation produit également de l'eau à différents degrés de désalinisation utilisables par les municipalités ou les industries avoisinantes. Le sel qui est produit peut être revendu dans des industries du chlore et de la soude. Enfin, presque toute la chaleur produite dans le procédé de l'invention est utilisée puisque la vapeur utilisée dans les évaporateurs de désalinisation est ensuite récupérée en tant que condensat de vapeur dans le dégazeur de l'unité de production de vapeur. Enfin, l'eau déminéralisée produite par désalinisation est utilisée comme eau d'appoint de l'unité de production de vapeur.

L'invention permet d'adapter la production aux variations de coûts de l'électricité : ainsi, si le coût de l'électricité est faible, on envoie moins de vapeur à la turbine et plus de vapeur à l'unité de désalinisation au moyen de la dérivation : ainsi, on produit plus d'eau désalinisée puisque plus de chaleur est disponible pour l'évaporation d'eau de mer (à cause de la détente isenthalpique) ; cette eau présente l'avantage de pouvoir être stockée contrairement à l'électricité. Si la demande et le prix en électricité sont élevés, l'usine peut produire moins d'eau désalinisée car on dispose de moins de vapeur pour l'évaporation de l'eau de mer, mais cette perte économique est compensée par le prix élevé de l'électricité et par le fait que plus d'eau désalinisée a été produite au cours d'une période où le coût de l'électricité était faible, l'eau désalinisée étant, elle, stockable.

Les variations de demande des trois produits - électricité, vapeur et eau désalinisée - suivent de comportements en général très différents en ce qui concerne la fréquence et le gradient de telles variations. Alors que les systèmes habituels ont des difficultés pour s'adapter simultanément à ces variations de demandes, l'invention permet d'accomplir une adaptation efficace, économique, rapide et techniquement souple face à telles scénarios car l'invention possède des éléments qui, en travaillant en coordination, permettent d'absorber et de moduler l'inertie des systèmes d'électricité, de vapeur et d'eau de manière optimale.

## Revendications

1. Procédé de production d'électricité, de vapeur et d'eau désalinisée au moyen d'une unité de production de vapeur, d'une turbine à vapeur et d'une unité de désalinisation d'eau de mer dans lequel :
- l'unité de production de vapeur produit de la vapeur,
- la turbine à vapeur utilise au moins une partie de la vapeur produite par l'unité de production de vapeur et produit de l'électricité et de la vapeur,
- l'unité de désalinisation d'eau de mer produit de l'eau désalinisée par vaporisation de l'eau de mer par échange de chaleur avec au moins une partie de la vapeur produite par la turbine à vapeur,
dans lequel on contrôle la quantité de vapeur produite par l'unité de production de vapeur à fournir à la turbine à vapeur en fonction de la demande en électricité, de la demande en eau désalinisée et de la demande en vapeur.

2. Procédé selon la revendication précédente, **caractérisé en ce que** la partie de vapeur produite par l'unité de production de vapeur qui n'est pas fournie à la turbine à vapeur est mélangée à la vapeur produite par la turbine à vapeur.

3. Procédé selon la revendication précédente, **caractérisé en ce que** l'unité de désalinisation d'eau de mer produit de l'eau désalinisée par vaporisation de l'eau de mer par échange de chaleur avec une partie du mélange de vapeur produite par l'unité de production de vapeur et de vapeur produite par la turbine à vapeur.

4. Procédé selon l'une des revendications précédentes, **caractérisé en ce qu'**après avoir vaporisé l'eau de mer, la vapeur produite par la turbine à vapeur devient un condensat de vapeur qui est utilisé comme source d'appoint en eau par l'unité de production de vapeur.

5. Procédé selon l'une des revendications précédentes, **caractérisé en ce qu'**une partie de l'eau désalinisée est utilisée comme source d'appoint en eau par l'unité de production de vapeur.

6. Procédé selon l'une des revendications précédentes, **caractérisé en ce que** le condensat de vapeur produit par la turbine à vapeur est utilisée comme source d'appoint en eau par l'unité de production de vapeur.

7. Procédé selon l'une des revendications précédentes, **caractérisé en ce qu'**il met en oeuvre une turbine à gaz produisant une partie de l'électricité, l'unité de production de vapeur utilisant la chaleur des gaz d'échappement de la turbine à gaz.

8. Procédé selon l'une des revendications précédentes, **caractérisé en ce que** l'unité de désalinisation d'eau de mer produit de l'eau désalinisée en partie par une technologie d'osmose inverse utilisant l'électricité produite par la turbine à vapeur.

9. Usine de production d'électricité, de vapeur et d'eau désalinisée comprenant :
- une unité de production de vapeur,
- une turbine à vapeur,
- une unité de désalinisation d'eau de mer,
- un moyen de fourniture de la vapeur produite par l'unité de production de vapeur à la turbine à vapeur,
- un moyen de fourniture d'au moins une partie de la vapeur produite par la turbine à vapeur à l'unité de désalinisation d'eau de mer,
**caractérisée en ce que** le moyen de fourniture de la vapeur produite par l'unité de production de vapeur à la turbine à vapeur est équipé d'un moyen de contrôle de la quantité de vapeur fournie à la turbine à vapeur.

10. Usine selon la revendication précédente, **caractérisé en ce que** le moyen de contrôle de la quantité de vapeur fournie à la turbine à vapeur est une dérivation placée sur le moyen de fourniture de la vapeur produite par l'unité de production de vapeur à la turbine à vapeur susceptible de dévier une partie de la vapeur produite par l'unité de production de vapeur.

11. Usine selon la revendication précédente, **caractérisé en ce que** la dérivation dévie une partie de la vapeur produite par l'unité de production de vapeur vers le moyen de fourniture d'au moins une partie de la vapeur produite par la turbine à vapeur à l'unité de désalinisation d'eau de mer.

12. Usine selon l'une des revendications 9 à 11, **caractérisé en ce que** la moyen de contrôle de la quantité de vapeur fournie à la turbine à vapeur est une vanne de détente isenthalpique.

13. Usine selon l'une des revendications 9 à 12, **caractérisé en ce qu'**elle comprend une turbine à gaz et un moyen de fourniture des gaz d'échappement de la turbine à gaz à l'unité de production de vapeur.
